# EUROPÄISCHE PATENTSCHRIFT

(11) **EP 1 105 707 B1**
(45) Veröffentlichungstag und Bekanntmachung des Hinweises auf die Patenterteilung: **03.06.2009**
(21) Anmeldenummer: 99941608.4
(22) Anmeldetag: 13.08.1999
(51) Int. Cl.: G01M 11/02, G01N 21/88

(54) **PRÜFMODUL ZUM PRÜFEN VON OPTISCHEN TEILEN AUF FEHLER**
INSPECTION MODULE FOR INSPECTING OPTICAL PARTS FOR FAULTS
MODULE D'ESSAI POUR CONTROLER LA PRESENCE EVENTUELLE DE DEFAUTS SUR DES PIECES OPTIQUES

(30) Priorität: 17.08.1998 EP 98250293
(43) Veröffentlichungstag der Anmeldung: 13.06.2001
(73) Patentinhaber: NOVARTIS AG, 4056 Basel (CH)
(72) Erfinder: BICKERT, Stefan, D-88662 Überlingen (DE); HAUCK, Roland, D-78355 Hohenfels-Deutwang (DE); ROTHE, Olaf, D-88690 Uhldingen/Mühlhofen (DE); SEIBERT, Roland, D-78355 Hohenfels (DE); WÖRNER, Hans, D-88662 Überlingen (DE); HAGMANN, Peter, D-63906 Erlenbach am Main (DE); BIEL, Roger, D-65936 Frankfurt am Main (DE)
(74) Vertreter: Bohest AG
(86) Internationale Anmeldenummer: PCT/EP1999/005935
(87) Internationale Veröffentlichungsnummer: WO 2000/009980

(56) Entgegenhaltungen:
- EP-A- 0 491 663
- US-A- 4 623 249
- US-A- 5 099 987
- US-A- 5 745 230

## Beschreibung

Die Erfindung betrifft ein Prüfmodul zum Prüfen von optischen Teilen auf Fehler gemäss dem Oberbegriff des Anspruchs 1.

In Serien hergestellte optische Teile, z.B. Kontaktlinsen, müssen auf Fehler wie Kratzer, Lunker oder ausgebrochene Ränder geprüft werden. Zu diesem Zweck ist es bekannt, die optischen Teile im Durchlicht zu beleuchten und durch einen bildauflösenden Sensor zu beobachten. Fehler, die zu einer Brechung oder Streuung des Lichtes führen, erscheinen dann dunkel. Die von dem bildauflösenden Sensor gelieferten Bildinformationen werden durch Bildverarbeitungsmittel ausgewertet. Die als fehlerhaft erkannten Teile werden anschliessend ausgesondert.

Das Problem ist, dass die Teile in der Fertigung in schneller Folge anfallen. Ein Prüfmodul muss daher einen hohen Durchsatz ermöglichen. Bekannte Prüfvorrichtungen sind relativ langsam, so dass der Durchsatz stark begrenzt ist. Weiterhin sind bekannte Prüfvorrichtungen kompliziert im Aufbau.

Ein Prüfmodul nach dem Oberbegriff von Anspruch 1 ist beispielsweise aus US-A-5 745 230 bekannt.

Der Erfindung liegt das Problem zugrunde, ein Prüfmodul der eingangs genannten Art mit einfachen Mitteln so aufzubauen, dass ein grosser Durchsatz von zu prüfenden optischen Teilen ermöglicht ist.

Die Erfindung löst diese Aufgabe mit den im Anspruch 1 angegebenen Merkmalen.

Hinsichtlich weiterer wesentlicher Ausgestaltungen des erfindungsgemässen Prüfmoduls wird auf die abhängigen Ansprüche verwiesen.

Für die Prüfung werden die zu prüfenden Teile, z.B. Kontaktlinsen, in ein mit Flüssigkeit gefülltes Transportgefäss gelegt, da sie in Flüssigkeit in einem entspannten Zustand vorliegen. Das Prüfteil sinkt in dem Transportgefäss gedämpft auf den Boden. Das Gefäss kann so geformt sein, dass das Teil am Boden eine im wesentlichen definierte Lage einnimmt. Erfindungsgemäss sind die Transportgefässe beim Durchlaufen der Prüfstation durch transparente Deckel abgeschlossen, deren Innenseite - zumindest im Bereich des Prüflichtstrahls - von der Flüssigkeit benetzt ist. Da die Beleuchtung durch den transparenten Deckel hindurch erfolgt, stelle die Benetzung des Deckels sicher, dass keine Schwankungen der Oberfläche der Flüssigkeit wie beispielsweise Wellen durch die Bewegung der Transportgefässe auftreten, die die Messung beeinträchtigen können. Diese Ausbildung der Transportgefässe ermöglicht es, dass die optische Prüfung einer Kontaktlinse direkt in dem Transportgefäss durchgeführt werden kann und keine separaten Verfahrensschritte erforderlich sind. Durch den gleichzeitigen Transport der Kontaktlinsen in den Transportgefässen und die Prüfung der Kontaktlinsen innerhalb der Gefässe ist ein schneller Durchsatz von zu prüfenden Kontaktlinsen ermöglicht und eine effiziente und wirtschaftliche Prüfung gewährleistet. Da die Transportgefässe durch einen Deckel während der Prüfung abgeschlossen sind, können Fremdeinflüsse wie die Wellenbewegung der Flüssigkeit ausgeschlossen werden und eine reproduzierbare Messung ist mit jedem Gefäss der Bahn ermöglicht. Nach der Prüfung wird das geprüfte optischen Teil wieder aus der Flüssigkeit herausgenommen und als "gut" oder "fehlerhaft" abtransportiert. Gemäss der Erfindung wird das Gefäss längs einer endlosen Bahn durch die Prüfstation geführt, so dass eine einfache und kostengünstige Ansteuerung jedes Gefässes ermöglicht ist. Da des weiteren mit jedem Gefäss ein Handhabungsmittel synchron mitläuft, steht für jeden einzelnen Handhabungsschritt eine ausreichende Zeitspanne zur Verfügung, so dass trotz eines hohen Durchsatzes eine zuverlässige Prüfung der Kontaktlinsen gegeben ist.

Insgesamt ist durch die Erfindung ein im Aufbau und in der Ansteuerung einfaches Prüfmodul geschaffen worden, da die Transportgefässe selbst bereits mit optischen Eigenschaften für die Prüfung der optischen Teile ausgestattet sind und der Aufwand für die Ansteuerung der einzelnen Transportgefässe durch die Anordnung längs einer endlosen Bahn minimiert ist.

Die Gefässe können prismatisch mit einem Boden aus transparentem Material ausgebildete und an ihrem offenen Ende durch den transparenten Deckel abschliessbar sein. Dann werden die Gefässe an der Prüfstation von der Deckelseite her beleuchtet und mittels des Sensors durch den Boden hindurch beobachtet. Durch die prismatische, an die Abmessungen der zu prüfenden optischen Teile angepasste Form der Gefässe wird sichergestellt, dass die zu prüfenden Teile in der Flüssigkeit in definierter Weise auf den Boden sinken und dort eine definierte Position einnehmen.

Das auf der Innenseite des Bodens aufliegende, zu prüfende optische Teil wird durch abbildende optische Mittel mit einem Schärfebereich, der das zu prüfende optische Teil umfasst, auf den bildauflösenden Sensor abgebildet. Die Dicke des Bodens und der Abstand zwischen Boden und Deckel sind so gross gewählt, dass der Deckel ebenso wie die Aussenseite des Bodens ausserhalb des Schärfebereichs der abbildenden optischen Mittel liegt. Der Deckel und die Aussenseite des Bodens können durch die Handhabung der Gefässe selbst mit Kratzern oder dergleichen versehen sein. Diese Flächen liegen aber ausserhalb des Schärfebereichs der Abbildung des optischen Teils auf den Sensor. Kratzer, Staub oder sonstige Fehler am Deckel oder der Aussenseite werden daher von dem Sensor nicht scharf "gesehen" und können keine Fehler des zu prüfenden optischen Teils vortäuschen.

Beim Einlegen des zu prüfenden optischen Teils in die Flüssigkeit können sich an dem Teil Blasen festsetzen, die Fehler des zu prüfenden optischen Teils vortäuschen würden. In einer weiteren vorteilhaften Ausbildung der Erfindung weist das Prüfmodul Mittel zum Entfernen von Blasen aus der Flüssigkeit vor der Messung auf. Dabei können die blasenentternenden Mittel beispielsweise mit Ultraschall arbeiten.

Bei einer bevorzugten Ausführungsform des erfindungsgemässen Prüfmoduls ist die endlose Bahn von einer Gefässkette gebildet, die um einen ersten und einen zweiten Drehtisch mit im Abstand voneinander verlaufenden, parallelen Drehachsen herumgeführt ist. Erste Handhabungsmittel für das Einlegen der zu prüfenden optischen Teile und die Durchführung der Prüfung laufen mit dem ersten Drehtisch um, und zweite Handhabungsmittel für das Herausnehmen der geprüften optischen Teile laufen mit dem zweiten Drehtisch um. Dabei können die ersten Handhabungsmittel einen Greifer zum Aufsetzen eines Deckels auf das Gefäss nach dem Einlegen des zu prüfenden optischen Teils und zum Abnehmen des Deckels nach der Prüfung enthalten. Die zweiten Handhabungsmittel können einen Greifer enthalten, der in einem Eingangsbereich des zweiten Drehtisches in die Flüssigkeit eintauchbar ist und das optische Teil ergreift und der in einem Ausgangsbereich des zweiten Drehtisches mit dem optischen Teil aus der Flüssigkeit herausbewegbar ist. Zwischen dem Eingangsbereich und dem Ausgangsbereich des zweiten Drehtisches kann ein Flüssigkeitsaustauschbereich vorgesehen sein, in welchem die Flüssigkeit aus den Gefässen abgesaugt und durch neue Flüssigkeit ersetzt wird. Zwischen den Drehtischen können quer zur Bewegungsrichtung der Gefässkette laufende Fördermittel zur Zuführung von zu prüfender Teile und zur Abführung geprüfter Teile angeordnet sein. Die Handhabungsmittel können durch feststehende Nocken längs der endlosen Bahn gesteuert sein, an denen die Handhabungsmittel vorbeilaufen. Die flüssigkeitsgefüllten Gefässe können kontinuierlich angetrieben sein. Eine solche Kurvensteuerung ist einfach zu realisieren. Durch die Verzahnung der einzelnen Gefässe ist eine feststehende Kopplung vorgegeben, so dass insgesamt der Steueraufwand minimiert ist.

Darüber hinaus laufen die ersten Handhabungsmittel einfach mit dem ersten Drehtisch um, die zweiten Handhabungsmittel mit dem zweiten. Es ist daher keine gesonderte Synchronisierung erforderlich. Auch wenn die Gefässkette und die Drehtische zur Erzielung eines hohen Durchsatzes relativ schnell laufen, bleibt für die verschiedenen Funktionen der Handhabungsmittel ausreichend Zeit. Die Handhabungsmittel brauchen sich daher nur relativ langsam zu bewegen. Das macht es möglich, die Handhabungsmittel, z.B. den Hub von Greifern, einfach durch feststehende Nocken zu steuern, an denen die Handhabungsmittel mit der Gefässkette vorbeilaufen. Durch das Mitlaufen der Handhabungsmittel kann auch der Antrieb der Gefässkette kontinuierlich mit konstanter Geschwindigkeit, also nicht schrittweise, erfolgen. Auch das bringt eine Vereinfachung.

Insgesamt sind die so aufgebauten Prüfmodule vergleichsweise klein, einfach und preisgünstig. Es ist daher möglich, eine Prüfvorrichtung zum Prüfen von optischen Teilen auf Fehler, insbesondere von Kontaktlinsen in der Weise aufzubauen, dass eine Mehrzahl von Prüfmodulen der vorgenannten Art mit je einem Rechner auf einen gemeinsamen Server geschaltet ist. Bei Ausfall eines Prüfmoduls fällt dann nicht die gesamte Prüfkapazität aus, was zu einer Unterbrechung der Fertigung führen müsste, sondern es bleibt ein grosser Prozentsatz, z.B. von 80% der Prüfkapazität erhalten.

Ein Ausführungsbeispiel der Erfindung ist nachstehend unter Bezugnahme auf die zugehörige Zeichnung näher erläutert. In der Zeichnung zeigen
- Fig. 1: eine schematische Darstellung eines mit Flüssigkeit gefüllten Gefäßes mit transparentem Deckel und einer zu prüfenden Kontaktlinse;
- Fig. 2: eine schematische Darstellung eines Prüfmoduls in Draufsicht;
- Fig. 3: eine schematische Darstellung einer aus einer Mehrzahl von Prüfmodulen gemäss Fig. 2 aufgebauten Prüfvorrichtung.

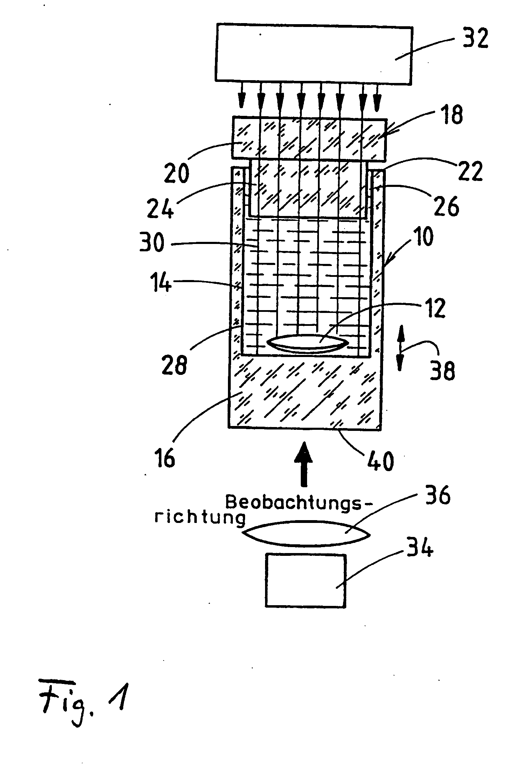

In Fig. 1 ist mit 10 ein Gefäss bezeichnet, in welchem eine Kontaktlinse 12 auf Fehler wie Kratzer, Lunker oder dgl. geprüft werden soll. Das Gefäss 10 hat eine prismatische, hier speziell eine zylindrische Grundform. In einem Abstand von der Innenwand 14 des Gefässes 10 liegt die Kontaktlinse 12 auf dem Boden des Gefässes. Das Gefäss weist einen dicken, transparenten Boden 16 auf. Das Gefäss 10 ist an seinem oberen Ende durch einen stopfenartigen Deckel 18 abgeschlossen, der aus einem transparenten Material besteht. Der Deckel 18 weist ein Kopfstück 20 auf, das auf dem oberen Rand 22 des Gefässes 10 aufsitzt, und einen Stopfenteil 24, der in das Gefäss 10 hineinragt. Zwischen dem Stopfenteil 24 und der Innenwand 14 des Gefässes 10 ist ein Spalt 26 gebildet. Das Gefäss 10 ist mit einer Flüssigkeit 28, nämlich Wasser gefüllt. Die Flüssigkeit 28 benetzt die untere Stirnfläche 30 des Deckels 18 und steigt etwas in dem Spalt 26 hoch.

Wie in Fig. 1 angedeutet ist, wird das Gefäss 10 von oben her mit gerichteter Beleuchtung von einer Beleuchtungseinrichtung 32 beleuchtet. Das Licht fällt durch den transparenten Deckel 18 und die Flüssigkeit 28 auf die zu prüfende Kontaktlinse 12. Die Kontaktlinse 12 wird von einem bildauflösenden Sensor 34 beobachtet. Zu diesem Zweck wird die Kontaktlinse 12 durch ein abbildendes optisches System 36 auf den Sensor 34 abgebildet. Optische Fehler der Kontaktlinse bewirken eine Streuung oder Ablenkung des einfallenden Lichts. Diese Fehler erscheinen daher in dem Bild dunkel. Die Abbildung durch das abbildende optische System 36 hat einen Schärfebereich, der in Fig. 1 durch einen Doppelpfeil 38 angedeutet ist. Die Stirnfläche 30 des Deckels 18 und die Aussenfläche des Bodens 16 liegen ausserhalb dieses Schärfebereichs 38. Diese Flächen können bei der Handhabung des Gefässes oder des Deckels 18 Kratzer oder dgl. erhalten haben. Solche Fehler werden aber durch den Sensor 34 nicht scharf "gesehen" und können keine Fehler der zu prüfenden Kontaktlinse 12 vortäuschen. Dadurch, dass die Stirnfläche des Deckels 18 von der Flüssigkeit 28 benetzt wird, ist die Oberfläche der Flüssigkeit in Richtung der Beleuchtung genau definiert. Die Oberfläche kann nicht durch Erschütterungen oder die Bewegung des Gefässes 10 schwanken oder Wellen bilden, was die Prüfung erschweren würde.

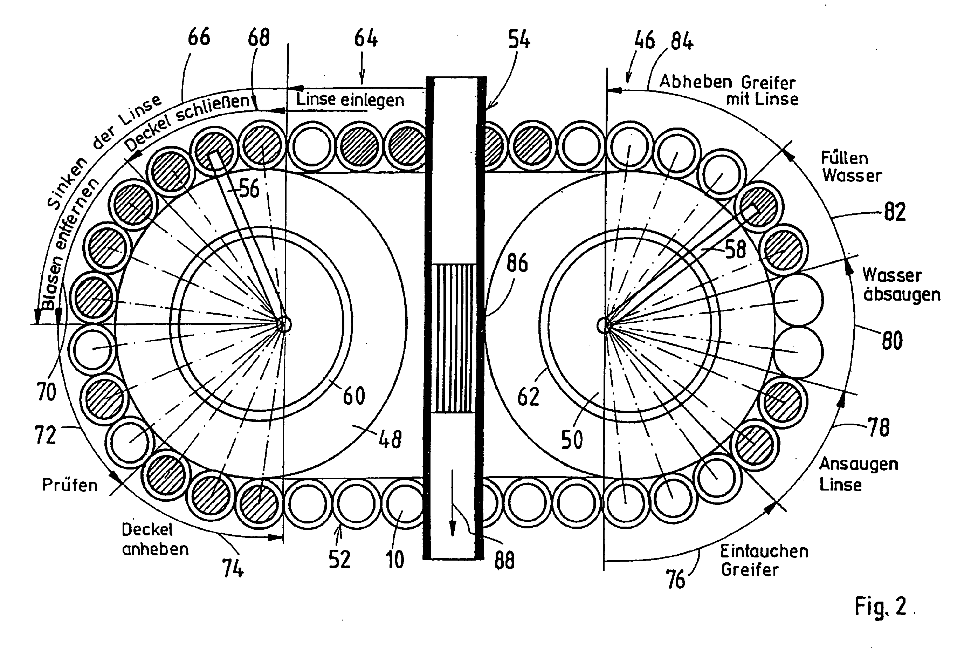

In Fig. 2 ist mit 46 generell ein Prüfmodul bezeichnet. Das Prüfmodul 46 weist zwei Drehtische 48 und 50 auf, die im Abstand voneinander mit zueinander parallelen Achsen angeordnet sind. Um die Drehtische 48 und 50 läuft eine Gefässkette 52. Die Gefässkette 52 besteht aus aneinandergereihten, flüssigkeitsgefüllten Gefässen 10 der in Fig. 1 dargestellten Art. Die Gefässe 10 der Gefässkette 52 bewegen sich auf einer endlosen Bahn um die beiden Drehtische 48 und 50. Zwischen den beiden Drehtischen 48 und 50 ist eine Fördereinrichtung 54 zum Zuführen zu prüfender Kontaktlinsen und zum Abführen geprüfter Kontaktlinsen angeordnet. Die Fördereinrichtung 54 erstreckt sich oberhalb der Gefässkette 52 und quer zu den zwischen den Drehtischen 48 und 50 verlaufenden geraden Abschnitten der Gefässkette 52. Die Drehtische 48 und 50 laufen kontinuierlich, d.h. mit konstanter Drehgeschwindigkeit, um.

Mit den Drehtischen 48 und 50 laufen Handhabungsmittel in Form von Greifern 56 bzw. 58 ebenfalls kontinuierlich um. In Fig. 2. ist der Übersichtlichkeit halber jeweils nur ein solcher Greifer 56 bzw. 58 dargestellt. Tatsächlich sind die Greifer 56 und 58 strahlenförmig so angeordnet, dass über jedem der Gefässe 10 der Gefässkette 52 auf den äusseren Halbkreisen der Drehtische 48 und 50 ein solcher Greifer 56 und 58 steht und mit dem Gefäss 10 umläuft. Auf diesen äusseren Halbkreisen erfolgt somit keine Relativbewegung in Umfangrichtung zwischen den Gefässen 10 und den Greifern 56 bzw. 58. Die Greifer 56 und 58 werden durch Nocken 60 bzw. 62 angehoben und abgesenkt. Die Nocken 60 und 62 erstrecken sich kreisförmig um die Drehachsen der jeweiligen Drehtische 48 bzw. 50.

Auf einem geraden "eingangsseitigen" Abschnitt 64 der Gefässkette 52 werden Kontaktlinsen, die über die Fördereinrichtung 54 zugeführt werden, in die Gefässe 10 eingelegt. Sie sinken auf einem Abschnitt 66 des Umlaufs der Gefässe in der Flüssigkeit auf den Grund der Gefässe 10, wie in Fig. 1 dargestellt. In einem Abschnitt 68 des Umlaufs wird durch den über dem jeweiligen Gefäss 10 stehenden Greifer 56 der Deckel 18 (Fig. 1) auf das Gefäss 10 aufgesetzt. Zu diesem Zweck wird der Greifer 56 über den Nocken 60 abgesenkt. Der Greifer 56 weist einen Saugkopf auf, der den Deckel 18 ansaugt, auf das Gefäss 10 aufsetzt und dann loslässt. Der Greifer 56 kann durch (nicht dargestellte) Nocken auch seitlich zu dem Gefäss bewegt werden, um die obere Öffnung des Gefässes 10 zum Einlegen der Kontaktlinse 12 oder für die Messung freizugeben.

Nach dem Aufsetzen des Deckels 18 werden in einem Abschnitt 70 die Blasen entfernt, die u.U. an der zu prüfenden Kontaktlinse 12 haften können. Das kann mittels Ultraschall geschehen und ist hier nicht im einzelnen dargestellt. Am Ausgang des Abschnitts70 ist die Kontaktlinse 12 auf den Boden des Gefässes 10 gesunken, die Blasen sind entfernt und der Deckel 18 ist aufgesetzt und wird an seiner Unterseite von der Flüssigkeit benetzt.

In einem anschliessenden Abschnitt 72 erfolgt die Prüfung der Kontaktlinse in der unter Bezugnahme auf Fig. 1 beschriebenen Weise. Der Greifer 56 wird dabei durch eine Nockensteuerung aus dem Strahlengang der Beleuchtungseinrichtung 32 herausbewegt.

In einem Abschnitt 74 wird der Deckel 18 wieder von dem Gefäss 10 abgehoben. Zu diesem Zweck wird der Greifer 56 wieder auf den Deckel 18 abgesenkt. Der Saugkopf saugt den Deckel an und hebt ihn von dem Greifer 56 dann weiter über die innere, nicht von der Gefässkette 52 umschlungene Hälfte des Drehtisches 48. Nach einer halben Umdrehung des Drehtisches 48 setzt der Greifer 56 den Deckel 18 dann wieder im Abschnitt 68 auf ein neues, mit einer Kontaktlinse 12 bestücktes Gefäss 10 auf.

Das Gefäss 10 ohne Deckel 18 läuft dann in dem in Fig. 2 dargestellten unteren, geraden Abschnitt der endlosen Bahn zu dem zweiten Drehtisch 50.

Mit dem zweiten Drehtisch 50 laufen ebenfalls Handhabungsmittel in Form von Greifern58 um, von denen in Fig. 2 der Übersichtlichkeit halber nur einer dargestellt ist. Die Greifer erstrecken sich sternförmig zu den einzelnen Gefässen 10 der Gefässkette 52 und laufen auf dem äusseren, dem Drehtisch 48 abgewandten, in Fig. 2 abgewandten Halbkreis mit je einem der Gefässe 10 mit. Die Greifer 58 sind von den Nocken 62 auf- und abbewegbar.

In einem Abschnitt 76 tauchen die Greifer 58 in die Gefässe 10 ein. In einem Abschnitt 78 werden mittels Saugköpfen, die an den Greifern 58 angebracht sind, die auf dem Grund der Gefässe 10 liegenden Kontaktlinsen 78 angesaugt.

Abschnitte 80 und 82 dienen einem Austausch der Flüssigkeit. Im Abschnitt 80 wird die Flüssigkeit abgesaugt. Im Abschnitt 82 wird frische Flüssigkeit eingefüllt. Das kann über Kanäle geschehen, die in den Greifern 58 vorgesehen sind. Schliesslich werden in einem Abschnitt 84 über die Nocken 62 die Greifer 58 mit den angesaugten Kontaktlinsen 12 aus den Gefässen 10 herausgehoben.

Die Greifer 58 mit den angesaugten Kontaktlinsen 12 bewegen sich dann weiter auf dem inneren Halbkreis des Drehtisches 50. Die von den Kontaktlinsen 12 befreiten Gefässe 10 bewegen sich weiter längs des in Fig. 2 dargestellten, oberen, geraden Abschnitts der endlosen Bahn zu dem Drehtisch 48 hin. Dort wiederholt sich der beschriebene Ablauf. Die Greifer 58 setzen die geprüften Kontaktlinsen in einem Bereich 86 auf der Fördereinrichtung 54 ab. Diese geprüften Kontaktlinsen werden dann, wie der Pfeil 88 andeutet, von der Fördereinrichtung abtransportiert.

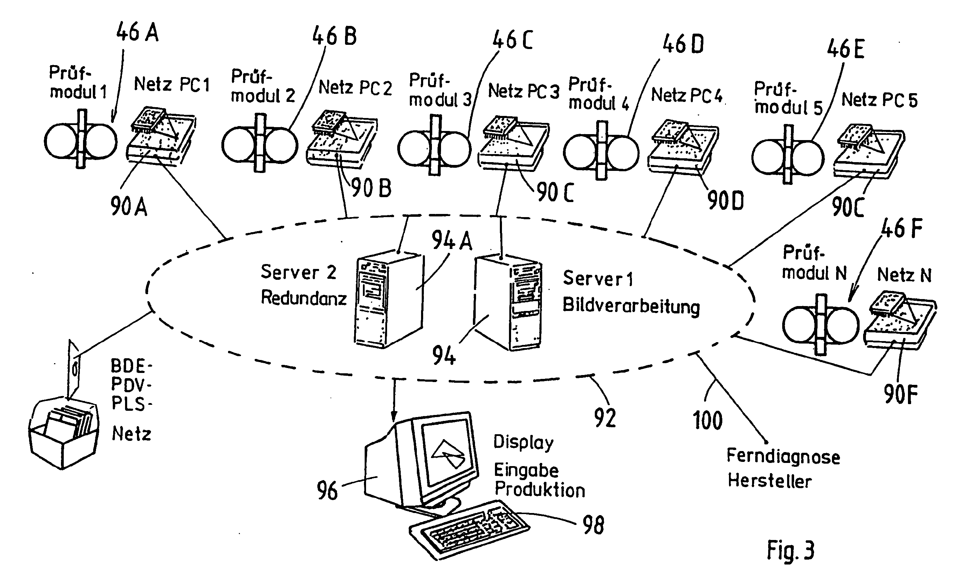

Fig. 3 zeigt schematisch eine Prüfvorrichtung für Kontaktlinsen, die eine Mehrzahl von Prüfmodulen 46A, 46B, 46D, 46E und 46F der in Fig. 2 dargestellten Art aufweist. Jedes der Prüfmodule 46A, 46B, 46C, 46E und 46F ist mit einem zugehörigen Rechner 90A, 90B, 90C, 90D, 90E bzw. 90F verbunden. Die Rechner 90A, 90B, 90C, 90D, 90E und 90F sind in einem Netz 92 mit einem Server 94 verbunden. Das Netz 92 enthält zweckmässigerweise aus Gründen der Redundanz noch einen zweiten Server 94A. Das Netz 92 ist mit einem Monitor 96 und einer Eingabetastatur 98 verbunden. Das Netz 92 kann über eine Datenleitung 100 für die Ferndiagnose eventuell auftretende Fehler der Prüfeinrichtung mit einer Zentrale, z.B. dem Hersteller der Prüfvorrichtung, verbunden sein.

## Patentansprüche

1. Prüfmodul (46) zum Prüfen von optischen Teilen (12) auf Fehler, insbesondere von als Spritzgussteile hergestellten Kontaktlinsen, mit einer Prüfstation (72), die eine Beleuchtungseinrichtung, einen bilderkennenden Sensor (34) und Mittel zur Bildverarbeitung umfasst, welche so angeordnet sind, dass die optischen Teile (12) im Betrieb von einer Seite her beleuchtet und von der dieser gegenüberliegenden Seite her mittels eines bildauflösenden Sensors (34) auf die Bildverarbeitungsmittel zur Fehlererkennung aufgeschaltet sind, wobei das Prüfmodul eine im Betrieb in einer endlosen Bahn umlaufende Folge von oben offenen, mit einer Flüssigkeit gefüllten Transportgefässen aufweist, sowie Handhabungsmittel (56,58), durch welche an einer Stelle vor der Prüfstation (72) jeweils ein zu prüfendes optisches Teil (12) in ein Transportgefäss (10) einlegbar und an einer anderen Stelle der Bahn das geprüfte optische Teil (12) aus dem Transportgefäss (10) wieder herausnehmbar ist, **dadurch gekennzeichnet, dass**
die im Betrieb auf der endlosen Bahn umlaufenden Tansportgefässe für die zu prüfenden optischen Teile (112) mit einem transparenten Deckel (18) verschliessbar und beim Durchlaufen der Prüfstation (72) durch den transparenten Deckel (18) derart abgeschlossen sind, dass die Innenseite (30) der Deckel (18) von der Flüssigkeit benetzt ist, und dass das jeweilige Handhabungsmittel (56,58) so ausgebildet ist, dass es im Betrieb mit jedem Transportgefäss (10) synchron mitläuft.

2. Prüfmodul nach Anspruch 1, **dadurch gekennzeichnet, dass** die Transportgefässe (10) zylindrisch mit einem Boden (16) aus einem transparenten Material ausgebildet sind.

3. Prüfmodul nach Anspruch 2, **dadurch gekennzeichnet, dass** die Beleuchtungseinrichtung (32) an der Prüfstation derart angeordnet ist, dass die Transportgefässe (10) von der Deckelseite (18) her beleuchtet werden, und dass der bilderkennende Sensor (34) derart angeordnet ist, dass der Boden (16) beobachtbar ist.

4. Prüfmodul nach Anspruch 3, **dadurch gekennzeichnet, dass** die Prüfstation (72) abbildende optische Mittel (36) umfasst, die einen Schärfebereich derart aufweisen, dass das auf der Innenseite des Bodens (16) aufliegende, zu prüfende optische Teil (12) auf den bilderkennenden Sensor (34) abbildbar ist.

5. Prüfmädul nach Anspruch 4, **dadurch gekennzeichnet, dass** die Transportgefässe (10) derart dimensioniert sind, dass die Dicke des Bodens (16) und der Abstand zwischen Boden (16) und Deckel (18) ebenso wie die Aussenseite (40) des Bodens (16) ausserhalb des Schärfebereichs. (38) der abbildenden optischen Mittel (36) liegt.

6. Prüfmodul nach Anspruch 5, **dadurch gekennzeichnet, dass** es Mittel zum Entfernen von Blasen aus der Flüssigkeit (28) vor dem Passieren der Prüfstation umfasst.

7. Prüfmodul nach Anspruch 6, **dadurch gekennzeichnet, dass** die blasenentfernenden Mittel mit ultraschall arbeiten.

8. Prüfmodul nach Anspruch 7, **dadurch gekennzeichnet, dass** die endlose Bahn von einer Kette (52) von hintereinander angeordneten Transportgefässen (10) gebildet ist, die uin einen ersten und einen zweiten Drehtisch (48,50) herumgeführt ist, die in einem bestimmten Abstand voneinander angeordnet sind und parallele Drehachsen aufweisen.

9. Prüfmodul nach Anspruch 8, **dadurch gekennzeichnet, dass** die synchron mit dem Transportgefäss (10) mitlaufenden Handhabungsmittel (56,58) erste Handhabungsmittel (56) umfassen für das Einlegen des zu prüfenden optischen Teils (12) in das Transportgefäss (10), welche für die Durchführung der Prüfung an dem ersten Drehtisch umlaufen, und zweite Handhabungsmittel (58), welche für das Herausnehmen des geprüften optischen Teils (12) an dem zweiten Drehtisch (50) umlaufen.

10. Prüfmodul nach Anspruch 9, **dadurch gekennzeichnet, dass** das jeweilige erste Handhabungsmittel einen Greifer (56) zum Aufsetzen des Deckels (18) auf das Transportgefäss (10) nach dem Einlegen des zu prüfenden optischen Teils (12) und zum Abnehmen des Deckels (18) nach der Prüfung aufweist.

11. Prüfmodul nach Anspruch 10, **dadurch gekennzeichnet, dass** das zweite Handhabungsmittel einen Greifer (58) aufweist, wobei der Greifer (58) in einem Eingangsbereich (76) des zweiten Drehtisches (50) in die Flüssigkeit eintauchbar ist und das optische Teil (12) ergreift, und wobei der Greifer in einem Ausgangsbereich (84) des zweiten Drehtisches (50) mit dem optischen Teil (12) aus der Flüssigkeit herausbewegbar ist.

12. Prüfmodul nach Anspruch 11, **dadurch gekennzeichnet, dass** es einen zwischen dem Eingangsbereich (76) und dem Ausgangsbereich (84) des zweiten Drehtisches (50) angeordneten Bereich für einen Flüssigkeitsaustausch umfasst, in welchem die Flüssigkeit (28) aus den Transportgefässen (10) absaugbar und durch neue Flüssigkeit ersetzbar ist.

13. Prüfmodul nach Anspruch 12, **dadurch gekennzeichnet, dass** zwischen den Drehtischen (48,50) Fördermittel (54) zur Zuführung zu prüfender Teile (12) und zur Abführung geprüfter Teile (12) angeordnet sind.

14. Prüfmodul nach Anspruch 13, **dadurch gekennzeichnet, dass** es feststehende Nocken (60,62) längs der Kette (52) von Transportgefässen zur Ansteuerung der Handhabungsmittel umfasst.

15. Prüfmodul nach Anspruch 14, **dadurch gekennzeichnet, dass** durch die im Betrieb mitlaufenden Handhabungsmittel die flüssigkeitsgefüllten Transportgefässe (10) kontinuierlich antreibbar sind.

16. Prüfvorrichtung zum Prüfen von optischen Teilen (12) auf Fehler, insbesondere von als Spritzgussteile hergestellten Kontaktlinsen, **dadurch gekennzeichnet, dass** eine Mehrzahl von Prüfmodulen (46A-46F) nach einem der Ansprüche 1 bis 15 mit je einem Rechner (90A-90F) auf ein Netz (2) mit einem gemeinsamen Server (94) geschaltet ist.

## Claims

1. Inspection module (46) for inspecting optical parts (12) for defects, especially contact lenses manufactured as injection-moulded parts, having an inspection station (72) comprising an illumination device, an image recognition sensor (34) and means for image processing, being so arranged that in operation the optical parts (12) are illuminated from one side and are observed from the side lying opposite that side by means of an image-resolving sensor (34) linked to image-processing means for identification of defects, wherein the inspection module comprises a succession of transport vessels in operation circulating in an endless line, which transport vessels are open at the top and are filled with a liquid; as well as handling means (56, 58) by means of which at a position upstream of the inspection station (72) an optical part (12) to be inspected can be introduced one at a time into a transport vessel (10) and, at another position of the line, the inspected part (12) can be taken out of the transport vessel (10) again,
**characterized in that**
the succession of transport vessels (10) for the optical parts (12) to be inspected, in operation circulating in an endless line, are closable by a transparent lid (18) and, upon passing through the inspection station (72), are closed by the transparent lid (18) in such a manner that the inside (30) of the lid (18) is wetted by the liquid, and wherein each respective handling means (56, 58) is formed in such a way that in operation it is synchronously concurrent with each transport vessel (10).

2. Inspection module according to claim 1, **characterized in that** the transport vessels (10) are cylindrical with a bottom (16) consisting of a transparent material.

3. Inspection module according to claim 2, **characterized in that** the illumination device (32) is so arranged at the inspection station that the transport vessels (10) are illuminated from the lid end (18) and the image recognition sensor (34) is so arranged that the bottom (16) can be observed.

4. Inspection module according to claim 3, **characterized in that** the inspection station (72) comprises imaging optical means (36) having a range of sharpness (38) such that the optical part (12) to be inspected lying on the inside of the bottom (16) can be imaged onto the image recognition sensor (34).

5. Inspection module according to claim 4, **characterized in that** the transport vessels (10) are so dimensioned that the thickness of the bottom (16) and the distance between bottom (16) and lid (18) in the same way as the outside (40) of the bottom (16) lies outside the range of sharpness (38) of the imaging optical means (36).

6. Inspection module according to claim 5, **characterized in that** means are provided for removing bubbles from the liquid (28) before passage through the inspection station (72).

7. Inspection module according to claim 6, **characterized in that** the bubble-removing means operate with ultrasound.

8. Inspection module according to claim 7, **characterized in that** the endless line is formed by a chain (52) of transport vessels (10) arranged one behind another, which chain (52) is passed around a first and a second turntable (48, 50) which are arranged at a certain distance from each other and have parallel axes of rotation.

9. Inspection module according to claim 8, **characterized in that** the handling means (56,58), which are synchronously concurrent with the transport vessels (10), comprise first handling means for introducing the part (12) to be inspected into the vessel (10), which for carrying out the inspection revolve at the first turntable (48), and second handling means, which for taking out the inspected optical part (12) revolve at the second turntable (50).

10. Inspection module according to claim 9, **characterized in that** the first handling means has a gripper (56) for placing the lid (18) on the vessel (10) after introduction of the optical part (12) to be inspected and for removing the lid (18) after the inspection.

11. Inspection module according to claim 10, **characterized in that** the second handling means has a gripper (58), which gripper (58), in an entry region (76) of the second turntable (50), is immersible in the liquid and grasps the optical part (12) and, in an exit region (84) of the second turntable (50), is movable out of the liquid (28) together with the optical part (12).

12. Inspection module according to claim 11, **characterized in that** there is provided between the entry region (76) and the exit region (84) of the second turntable (50) a region for an exchange of liquid in which the liquid (28) can be removed from the vessels (10) by suction and replaced by new liquid.

13. Inspection module according to claim 12, **characterized in that** conveying means (54) for supplying parts (12) to be inspected and for removing inspected parts (12) are arranged between the turntables (48, 50).

14. Inspection module according to claim 13, **characterized in that** fixed cams (60, 62) are provided along the chain (52) of vessels for the purpose of guiding the handling means.

15. Inspection module according to claim 14, **characterized in that** through the concurrent handling means in operation the liquid-filled vessels (10) are driven continuously.

16. Inspection apparatus for inspecting optical parts (12) for defects, especially contact lenses manufactured as injection-moulded parts, **characterized in that** a plurality of inspection modules (46A-F) according to any one of claims 1 to 15 are each connected by a respective computer (90A-F) to a network (92) having a common server (94).

## Revendications

1. Module de contrôle (46) permettant de contrôler, pour la recherche de défauts, des éléments optiques (12), en particulier des lentilles de contact produites sous forme d'éléments moulés par injection, comportant un poste de contrôle (72), qui comprend un dispositif d'éclairage, un capteur de reconnaissance d'image (34) et des moyens pour le traitement de l'image, qui sont disposés de telle façon qu'en service, les éléments optiques (12) soient éclairés depuis un côté et soient, depuis le côté opposé à ce dernier, entrés, au moyen d'un capteur de définition d'image (34.), sur les moyens de traitement d'image, en vue de la reconnaissance de défauts, le module de contrôle présentant une succession de récipients de transport ouverts en haut et remplis d'un liquide, circulant, en service, suivant une trajectoire en boucle sans fin, ainsi que des moyens de manipulation (56, 58), grâce auxquels un élément optique (12) à contrôler peut être respectivement introduit dans un récipient de transport (10), en un emplacement précédant le poste de contrôle (72), et l'élément optique (12), contrôlé, peut être à nouveau retiré du récipient de transport (10) en un autre emplacement de la trajectoire,
**caractérisé en ce que**
les récipients de transport pour les éléments optiques (12) à contrôler, circulant en service sur la trajectoire en boucle sans fin, peuvent être obturés avec un couvercle transparent (18) et, lors du franchissement du poste de contrôle (72), sont fermés par le couvercle transparent (18) d'une manière telle, que la face intérieure (30) du couvercle (18) soit mouillée par le liquide, et **en ce que** le moyen de manipulation respectif (56, 58) est conçu de telle façon qu'en service, il tourne en synchronisme avec chaque récipient de transport (10).

2. Module de contrôle selon la revendication 1, **caractérisé en ce que** les récipients de transport (10) sont dotés d'une forme cylindrique, avec un fond (16) en un matériau transparent.

3. Module de contrôle selon la revendication 2, **caractérisé en ce que** le dispositif d'éclairage (32) est disposé, à hauteur du poste de contrôle, d'une manière telle, que les récipients de transport (10) soient éclairés depuis le côté du couvercle (18), et **en ce que** le capteur de reconnaissance d'image (34) est disposé d'une manière telle, que le fond (16) puisse être observé.

4. Module de contrôle selon la revendication 3, **caractérisé en ce que** le poste de contrôle (72) comprend des moyens optiques (36) de reproduction d'image, qui présentent une profondeur de champ telle, que l'image de l'élément optique (12) à contrôler, reposant sur la face intérieure du fond (16), puisse être reproduite sur le capteur de reconnaissance d'image (34).

5. Module de contrôle selon la revendication 4, **caractérisé en ce que** les récipients de transport (10) sont dimensionnés d'une manière telle, que l'épaisseur du fond (16) et l'intervalle entre le fond (16) et le couvercle (18), tout comme la face extérieure (40) du fond (16), se situent en dehors de la profondeur de champ (38) des moyens optiques (36) de reproduction d'image.

6. Module de contrôle selon la revendication 5, **caractérisé en ce qu'**il comprend des moyens pour éliminer des bulles du liquide (28), avant le passage par le poste de contrôle.

7. Module de contrôle selon la revendication 6, **charactériseé en ce que** les moyens pour éliminer des bulles du liquide opèrent avec ultra-sons.

8. Module de contrôle selon la revendication 7, **caractérisé en ce que** la trajectoire en boucle sans fin est formée par une chaîne (52) de récipients de transport (10) disposés l'un derrière l'autre, qui est passée autour d'une première et d'une deuxième table rotative (48, 50), lesquelles sont disposées à une distance déterminée l'une de l'autre et présentent des axes de rotation parallèles.

9. Module de contrôle selon la revendication 8, **caractérisé en ce que** les moyens de manipulation (56, 58) tournant en synchronisme avec le récipient de transport (10), comprennent des premiers moyens de manipulation (56) pour l'introduction de l'élément optique (12) à contrôler dans le récipient de transport (10), lesquels premiers moyens de manipulation tournent sur la première table rotative pour l'exécution de l'examen de contrôle, et des deuxièmes moyens de manipulation (58), qui tournent sur la deuxième table rotative (50) pour le retrait de l'élément optique (12) contrôlé.

10. Module de contrôle selon la revendication 9, **caractérisé en ce que** chacun des premiers moyens de manipulation présente une pince (56) destinée à appliquer le couvercle (18) sur le récipient de transport (10), après l'introduction de l'élément optique (12) à contrôler, et à enlever le couvercle (18) après l'examen de contrôle.

11. Module de contrôle selon la revendication 10, **caractérisé en ce que** le deuxième moyen de manipulation présente une pince (58), la pince (58) pouvant, dans une zone d'entrée (76) de la deuxième table rotative (50), être plongée dans le liquide et prend l'élément optique (12), et la pince pouvant être extraite du liquide, avec l'élément optique (12), dans une zone de sortie (84) de la deuxième table rotative (50).

12. Module de contrôle selon la revendication 11, **caractérisé en ce qu'**il comprend une zone pour un changement du liquide, située entre la zone d'entrée (76) et la zone de sortie (84) de la deuxième table rotative (50), et dans laquelle le liquide (28) peut être évacué par aspiration des récipients de transport (10) et remplacé par du liquide nouveau.

13. Module de contrôle selon la revendication 12, **caractérisé en ce qu'**entre les tables rotatives (48, 50) sont disposés des moyens d'acheminement (54) destinés à amener des éléments (12) à contrôler et à évacuer des éléments (12) contrôlés.

14. Module de contrôle selon la revendication 13, **caractérisé en ce qu'**il comprend, le long de la chaîne (52) de récipients de transport, des cames fixes (60, 62) pour la commande des moyens de manipulation.

15. Module de contrôle selon la revendication 14, **caractérisé en ce que** les récipients de transport (10), remplis de liquide, peuvent être entraînés d'une façon continue par les moyens de manipulation tournant en service.

16. Appareil de contrôle destiné à contrôler, pour la recherche de défauts, des éléments optiques (12), en particulier des lentilles de contact produites sous forme d'éléments moulés par injection, **caractérisé en ce qu'**une multiplicité de modules de contrôle (46A-46F), selon l'une des revendications 1 à 15, dotés chacun d'un ordinateur (90A-90F), est connectée à un serveur commun (94), sur un réseau (2).
